Europäisches Patentamt

European Patent Office

Office européen des brevets

(19)

(11) Publication number: **0 177 102**
**A1**

## (12) EUROPEAN PATENT APPLICATION

(21) Application number: **85201566.8**

(22) Date of filing: **30.09.85**

(51) Int. Cl.⁴: **B01J 23/88**

(30) Priority: **01.10.84 NL 8402997**

(43) Date of publication of application:
**09.04.86 Bulletin 86/15**

(84) Designated Contracting States:
**AT BE CH DE FR GB IT LI NL SE**

(71) Applicant: UNILEVER NV
Burgemeester s'Jacobplein 1 P.O. Box 760
NL-3000 DK Rotterdam(NL)
Applicant: UNILEVER PLC
Unilever House Blackfriars P.O. Box 68
London EC4P 4BQ(GB)

(72) Inventor: Staal, Leendert Hendrik
Tureluur 52
NL-3191 GJ Hoogvliet(NL)
Inventor: Poels, Eduard Karel
Oude Rijn 128
NL-2312 HK Leiden(NL)
Inventor: van Leeuwen, Willem Aart
Johan Willem Frisolaan 54
NL-3136 BH Vlaardingen(NL)

(74) Representative: Wiesenhaan, Herman, Drs. et al
Unilever N.V. Patent Division P.O.Box 137
NL-3130 AC Vlaardingen(NL)

(54) Catalyst material.

(57) The invention provides a catalyst material comprising a carrier material containing $Al_2O_3$ and $SiO_2$, a bivalent metal and an active phase of at least two metal compounds, one of Group VIII (Ni and/or Co) and another of Group VI (Mo and/or W).

The catalysts are useful for fixed bed and ebullating bed processes, especially hydrogenolysis and hydrogenization reactions.

EP 0 177 102 A1

# CATALYST MATERIAL

The invention relates to a catalyst composition comprising a carrier material consisting of an oxide of one or more elements having an atomic number between 12 and 15 ($Al_2O_3$ and/or $SiO_2$), a bivalent metal compound of group II of the Periodic Table and an active phase.

Catalysts of this type are known in the art, inter alia from GB-A-1,459,711 (Kali-Chemie A.G.), which discloses alumina granules containing from 0.2-15% zinc in the form of oxide and up to about 1% of precious metal like platinum, palladium, ruthenium, rhodium or rhenium. These catalysts are useful for reducing nitrogen oxides in exhaust gases.

US-A-3,278,453 (Standard Oil Co.) discloses catalysts comprising alumina, an alkaline earth metal oxide (e.g. MgO) and a group IIb metal oxide (e.g. ZnO or CdO), which are useful for the dehydrogenation of lower alkenes and alkylbenzenes.

Furthermore, ZnO is a well-known component of methanol synthesis and low-temperature shift catalysts (cf. Catalysis and chemical processes, by Pearce & Patterson, Leonard Hill, 1981, Chapter 6).

It has now been found that catalysts comprising alumina- and/or silica-containing carrier material, a bivalent metal compound of group II of the Periodic Table and an active phase comprising at least two classes of metal compounds of which one is a group VIII metal and the other is a group VI metal, are very suitable for certain hydrogenolysis and hydrogenation reactions. These catalysts are highly active and usually have a long lifetime.

Catalyst material, especially when used in fixed bed or ebullating bed type reactions, tends to wear off relatively quickly, as a result of which considerable losses of the amount of catalyst arise. These losses make it necessary to regenerate and supplement the catalyst more quickly, while also more finely divided carrier material from the hydrogenated product has to be removed.

The present invention provides a catalyst material mainly comprising a carrier of oxide of one or more of the elements aluminium and silicon, an oxide of a bivalent metal in an amount of between 0.1 and 10 wt.%, preferably between 0.5 and 5 wt.% of the catalyst material and a suitable active phase. The bivalent metal is preferably a group IIb and/or IIa metal of the Periodic Table and has an atomic number between 11 and 31, preferably between 19 and 31. Particularly calcium, magnesium, barium and especially zinc are suitable. It is probable that the metal (II) oxide somehow enters into reaction with the aluminium oxide and/or silicon dioxide of which the carrier mainly consists and that, as a result thereof, its wearing resistance improves. It is surprising that, as a result thereof, especially the wearing resistance of aluminium trioxide carrier material is considerably improved. This effect is less marked in the case of silicon dioxide carrier material. Moreover, often also the catalytic activity of the active phase is increased by the group II metal.

The catalyst material according to the present invention can be prepared by first treating carrier particles consisting of $Al_2O_3$ and/or $SiO_2$ (for instance according to the pore-volume impregnation method) with a solution of a salt of a suitable bivalent metal, preferably followed by calcination.

Alternatively, the group II metal can be co-impregnated with the group VI and group VIII metals or group II metals can be incorporated in the carrier paste prior to extrusion.

Pseudoboehmite and transitional aluminas like gamma-alumina, eta-alumina, theta-alumina, alpha-alumina, silica and zeolites ex-trudates are particularly suitable as carrier starting material. The carrier material used according to the present invention is mostly available as shaped forms such as granules, extrudates such as small rods etc. and this embodiment of the invention, in which the carrier material is present as shaped forms, is also encompassed. Furthermore, it has been observed that the improved wearing resistance of material according to the invention is often combined with a higher catalytic activity, possible a promotor-like effect of e.g. zinc, magnesium and calcium. The catalytically active phase can be applied to the carrier material in various ways known per se. Various precipitation and impregnation methods are possible. It is also possible to combine the treatment of the carrier material with a group II metal salt and apply the active phase in a single step or, alternatively, to carry out both steps (treatment with a group II metal and applying the active phase) one after the other and to calcine in a single treatment. Calcination is preferably carried out at 400-450°C and immediately after the bivalent metal has been applied.

As catalytically active phase the following metallic compounds or mixtures thereof are suitable: a group VIII metal compound, preferably oxide or sulphide, combined with a group VI metal compound, preferably oxide or sulphide. Examples thereof are: nickel oxide and/or cobalt oxide, nickel sulphide and/or cobalt sulphide in combination with tungsten oxide and/or sulphide and/or molybdenum oxide and/or sulphide.

Preferably the group VIII metal has an atomic number between 26 and 29 (cobalt and nickel), whereas the group VI metal belongs to group VIa having an atomic number between 41 and 75 (molybdenum and tungsten). The nickel/molybdenum and cobalt/molybdenum combinations are preferred.

The amount of nickel and/or cobalt ranges between 2 and 5.5%, preferably 3-4% (w/w) and the amount of molybdenum or tungsten between 8 and 22%, preferably 11-18% (w/w) calculated as oxides based on the catalyst.

Catalysts according to the present invention are particularly suitable for carrying out chemical reactions in solid bed or in ebullated bed, in particular for hydrogenolysis and hydrogenation, such as e.g. desulphurization, denitrogenization, hydrocracking of petroleum (fractions), as well as for hydrogenation of mineral, vegetable or animal oils and fats.

The present invention provides catalysts having improved mechanical properties such as wearing resistance combined with good performance. This improved wearing resistance was determined by means of a simple accelerated wearing resistance test. For that purpose a sample of carrier material was introduced into a cylindrical glass vessel. Two steel rods (diameter 6.5 mm) were also put in this cylinder and rolling was carried out for 1 hour on a mechanical roller at 100 rpm. The sample was then sieved on a 20 mesh sieve and the loss of weight that occurred was measured. A sample of unrolled (blank) starting material was sieved and the loss of weight (fines) was determined by weighing.

The loss of weight of the treated material was then subtracted from the loss of weight of the above blank (unrolled) material. To convert this into a percentage, it should be divided by the amount of starting material minus the blank loss of weight and multiplied by 100. Measured in this way, the percentages of worn off carrier mass (attrition) could be reduced from 10% $Al_2O_3$ according to the prior art to approximately 4% for the same $Al_2O_3$, in which, according to the invention, 2% ZnO had been incorporated.

The invention will now be illustrated by the following Examples.

### Example 1

An amount of 100 g of a catalyst carrier ($SiO_2$ -000-3E ex AKZO, Arnhem, Netherlands, internal surface area = 200 m²/g, pore volume ($H_2$) = 0.96 ml/g, 3 mm extrudates) was impregnated with a solution of 13 g $Zn(NO_3)_2.6H_2O$ in 96 ml water according to the pore-volume impregnation method. The impregnated catalyst carrier was dried at 120°C for a period of 16 hours and then calcined at 400°C for 2 hours. In the forced wearing resistance test, as described hereinbefore, a reduction of attrition was observed for the ZnO-containing carrier:

11% wear after 1 hour for the carrier not impregnated with Zn(II); 5% wear after 1 hour for carrier material containing about 4% (w/w) zinc oxide (calculated).

The treated and untreated carriers of Example 1 were used for the preparation of desulphurization catalysts for petroleum. After application of the active phase by means of pore-volume impregnation with aqueous solutions of the nickel and molybdenum salts, the favourable effect of zinc oxide on the wearing resistance as determined above remained intact.

|  | % ZnO | % NiO | % $MoO_3$ | % wear |
|---|---|---|---|---|
|  | 4 | 4 | 16 | 6 |
| Comparison | 0 | 4 | 16 | 10 |

### Examples 2-6

100 g of the catalyst carrier gamma-$Al_2O_3$ (001-1.5 E ex AKZO, Arnhem, Netherlands, internal surface area 250 m²/g, pore volume ($H_2O$) 0.64 ml/g, was impregnated with a solution of a group II metal nitrate in such a way that after calcination at 450°C a carrier material was formed having about 2% metal oxide load (Metal = Ca, Mg, Zn).

The attrition in the accelerated wearing resistance test appeared to have been improved considerably by applying 2% (w/w) of a group II metal oxide, as appears below.

· Carrier gamma-$Al_2O_3$

|  |  | % wear after 2 hours |
|---|---|---|
| Example (blank carrier) | | 6 |
| 2 | 2% CaO | 5 |
| 3 | 2% MgO | 4 |
| 4 | 2% ZnO | 3.5 |

The carriers impregnated and calcined with a group II metal oxide were used for the preparation of desulphurization catalyst according to the pore-volume impregnation method with an aqueous solution containing the required nickel and molybdenum salt concentrations. The activity of these catalysts was compared with the de sulphurization activity of catalysts on a carrier which had not first been treated with a group II metallic compound.

The desulphurization was carried out at 350°C, at 10 atm. total pressure in a stream of 200 ml/min $H_2$. As feed, a mixture of toluene and thiophene was used in a ratio such that the sulphur content was 2.24%. Catalysts were sulphurated with $H_2:H_2S$ = 90:10. The desulphided percentage is listed in the following Table.

Table

Catalyst composition

carrier $Al_2O_3$

| Example N° | ZnO (%) | CaO (%) | MgO (%) | NiO (%) | CoO (%) | MoO$_3$ (%) | % Desulphurization |
|---|---|---|---|---|---|---|---|
| 2 | – | 2 | – | 4.0 | – | 15.1 | 99.6 |
| 3 | – | – | 3 | 3.3 | – | 16.6 | 87.5 |
| 4 | 2.0 | – | – | 3.5 | – | 13.9 | 99.4 |
| 5 | 2.0 | – | – | 4.0 | – | 16.1 | 99.6 |
| 6 | 2.3 | – | – | – | 3.1 | 12.2 | 99.5 |
| Compar. | – | – | – | 3.4 | – | 13.2 | 80.0 |

From the above it will be clear that particularly calcium and zinc oxide had a favourable effect on the desulphurization activity, while the oxides of these metals also improved the wearing resistance.

**Claims**

1. A catalyst comprising a carrier material consisting of an oxide of one or more elements having an atomic number between 12 and 15, a bivalent metal compound of group II of the Periodic Table and an active phase comprising at least two classes of metal compounds, characterized in that both a group VIII metal and a group VI metal are present.

2. A catalyst according to claim 1, characterized in that the carrier material comprises $Al_2O_3$.

3. A catalyst according to claim 1 or 2, characterized in that the bivalent metal belongs to group IIa or group IIb of the Periodic Table.

4. A catalyst according to claim 3, characterized in that the atomic number of the group II metal is between 11 and 31.

5. A catalyst according to any of the claims 1-4, characterized in that the bivalent metal is present in an amount between 0.1 and 10% by weight of the catalyst.

6. A catalyst according to any of the preceding claims, characterized in that the group VIII metal is cobalt and/or nickel.

7. A catalyst according to any of the preceding claims, characterized in that cobalt and/or nickel is present in an amount of 2-5.5% by weight calculated as oxide.

8. A catalyst according to any of the preceding claims in which the Group VI metal is molybdenum and/or tungsten.

9. A catalyst according to any of the preceding claims, in which the group VI metal is present in an amount of 8-22% by weight calculated as oxide.

10. A catalyst according to any of the preceding claims, in which the active phase is present as sulphides.

11. A catalyst according to any of the preceding claims, in which the active phase is present as oxides.

12. Shaped catalyst particles consisting of a carrier material and an active phase as described in any of the preceding claims.

13. A process for the preparation of catalyst material as described in any of the preceding claims, characterized in that particles, mainly consisting of oxide of one or more elements having an atomic number between 12 and 15, are treated with a solution of a salt of a bivalent metal and with one or more salts of a group VI and a group VIII metal, followed by calcination and optionally sulphidation.

14. A process for hydrogenolysis and hydrogenation, characterized in that a catalyst is used according to any of the claims 1-12.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 061 555 (E.H. McGREW et al.)<br>* Column 1, lines 10-16; column 2, lines 10-72; column 3, lines 1-9 * | 1-9,11 -14 | B 01 J 23/88 |
| X | FR-A-1 566 831 (BADISCHE)<br>* Page 1, lines 21-42; figure 2, lines 5-16 * | 1-12 | |
| A,D | US-A-3 278 453 (A.N. WENNERBERG)<br>* Column 5, lines 1-18; column 1, lines 55-70 * | 1-5 | |
| A,D | GB-A-1 459 711 (KALI-CHEMIE)<br>* Page 1, lines 44-63 * | 1-5 | **TECHNICAL FIELDS SEARCHED (Int. Cl.4)** |
| A | US-A-2 693 497 (S.A. BALLARD et al.)<br>* Column 6, lines 40-47; column 7, lines 7078; column 3, lines 41-72; column 4, lines 23-28 * | 1-5,12 ,14 | B 01 J |
| A | US-A-4 009 199 (F. LIST et al.)<br>* Column 7, lines 3-68; column 8, lines 15-64; column 9, lines 18-68; column 12, lines 22-39 * | 1,3-5 | |

--- -/-

The present search report has been drawn up for all claims

| Place of search | Date of completion of the search | Examiner |
|---|---|---|
| THE HAGUE | 11-12-1985 | KERRES P.M.G. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | US-A-4 088 607 (G. WEIDENBACH et al.)<br>* Column 1, lines 65-68; column 2, lines 1-35 * | 1-5 | |
| | ----- | | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 11-12-1985 | KERRES P.M.G. |